# FASCICULE DE BREVET EUROPEEN

(11) **EP 1 400 195 B1**
(45) Date de publication et mention de la délivrance du brevet: **09.02.2005**
(21) Numéro de dépôt: 03292299.9
(22) Date de dépôt: 18.09.2003
(51) Int. Cl.: A47J 37/06

(54) **Appareil électroménager à panneaux articulés**
Haushaltsgerät aus scharnierartig verbundenen Rostelementen
Domestic appliance consisting of hinged sections

(30) Priorité: 20.09.2002 FR 0211692
(43) Date de publication de la demande: 24.03.2004
(73) Titulaire: SEB S.A., 69130 Ecully (FR)
(72) Inventeur: Moine, Olivier, 73100 Aix-les-Bains (FR)
(74) Mandataire: Pichat, Thierry

(56) Documents cités:
- EP-A- 0 646 344
- EP-A- 0 792 608
- WO-A-02/21985
- FR-A- 2 516 352

## Description

La présente invention se rapporte aux appareils électroménagers, essentiellement de cuisson, à panneaux articulés entre eux par une charnière, en particulier aux appareils du type gaufrier ou grill viande.

On connaît un appareil comportant deux panneaux articulés entre eux par une charnière qui s'étend selon un axe d'articulation et qui comporte deux charnons latéraux solidarisés à un premier panneau et un charnon central disposé selon la direction axiale entre les charnons latéraux et solidarisé au deuxième panneau.

Des appareils munis de telles charnière sont par exemples décrits dans la demande de brevet FR 2 745 164.

Dans une telle charnière de l'art antérieur, les charnons latéraux et le charnon central ont chacun la forme générale d'un cylindre creux dont la cavité est coaxiale à l'axe d'articulation, la charnière comprenant en outre un arbre adapté à pénétrer dans l'ensemble des cavités des charnons alignés les uns à côté des autres, de façon à réaliser la liaison entre les panneaux.

Toutefois, une telle charnière présente l'inconvénient majeur de nécessiter un alignement précis des différents charnons afin de pouvoir introduire l'arbre dans l'ensemble des cavités.

De plus, quand des câbles connectent les deux panneaux entre eux (par exemple des câbles électriques, optiques...), il est nécessaire de les faire passer par la charnière. Or cette opération s'avère fastidieuse dans le cas des charnières de l'art antérieur vu qu'il est nécessaire, à partir d'un premier panneau, d'introduire les câbles à travers un orifice réalisé dans un charnon de ce premier panneau et une première ouverture de l'arbre faisant face à cet orifice, et de les entraîner jusqu'à ce qu'ils pénètrent dans le deuxième panneau après avoir traversé une deuxième ouverture de l'arbre et un orifice réalisé dans un charnon de ce deuxième panneau faisant face à la deuxième ouverture.

On connaît aussi, d'après le document FR 2 516 352, un appareil électroménager du type comportant deux panneaux articulés entre eux par une charnière qui s'étend selon un axe d'articulation et qui comporte, d'une part, au moins un charnon mâle solidarisé à un premier panneau, et, d'autre part, au moins un charnon femelle solidarisé au deuxième panneau, disposé de façon adjacente dans le prolongement axial du charnon mâle, et comprenant, d'une part, une première enveloppe solidarisée au deuxième panneau, et, d'autre part, une deuxième enveloppe complémentaire solidarisée à un élément rapporté qui comporte des moyens complémentaires de fixation adaptés à coopérer avec des moyens de fixation du deuxième panneau de manière à solidariser l'élément rapporté au deuxième panneau et à réaliser le charnon femelle.

Toutefois la charnière divulguée dans ce document est particulièrement complexe. En effet, chaque panneau comprend un charnon extérieur formé par deux enveloppes séparables dont l'une est solidarisée au panneau, et un charnon intermédiaire formé par deux enveloppes séparables dont l'une est solidarisée au panneau, le charnon intermédiaire d'un panneau étant adjacent à la fois au charnon extérieur de l'autre panneau et à un charnon central monobloc porté par le socle de l'appareil articulé aux deux panneaux. De plus, chaque charnon intermédiaire forme un charnon femelle vis à vis du charnon extérieur adjacent et un charnon mâle vis à vis du charnon central.

Le montage est particulièrement délicat. En effet, pour les deux panneaux, l'extrémité axiale mâle portée par l'enveloppe intermédiaire solidaire du panneau est insérée dans l'extrémité axiale adjacente correspondante du charnon central, les enveloppes intermédiaires séparables des panneaux sont alors solidarisées à l'enveloppe intermédiaire correspondante de façon à former le charnon intermédiaire correspondant, et ensuite, les enveloppes extérieures séparables des panneaux sont solidarisées à l'enveloppe extérieure correspondante de façon à former le charnon extérieur correspondant.

Par ailleurs, cette charnière ne permet pas de résoudre le problème lié au passage de câbles reliant les deux panneaux entre eux.

Le problème posé est de réaliser une charnière dont les pièces constitutives sont simples, peuvent être facilement fabriquées, par exemple par un simple moulage, et dont la configuration permet un montage aisé et rapide de la charnière. De plus, quand cette charnière est utilisée pour faire passer des câbles connectant les panneaux entre eux, un problème supplémentaire posé est de réaliser une charnière facilitant la mise en place des câbles à travers celle-ci.

Un autre problème posé est d'avoir un procédé de montage de charnière permettant le montage rapide et aisé de la charnière.

Selon l'invention, dans une charnière d'un appareil du type précité, chaque extrémité axiale du charnon femelle, qui est adjacente à un charnon, recouvre l'extrémité axiale adjacente d'un charnon mâle, et est formée par l'extrémité axiale correspondante de la première enveloppe qui forme une partie de cylindre et par l'extrémité axiale correspondante de la deuxième enveloppe qui forme une autre partie complémentaire du même cylindre de manière à emprisonner l'extrémité axiale du charnon mâle.

Ainsi, selon l'invention, chaque charnon femelle est soit un charnon extérieur avec un seul charnon qui lui est adjacent, et ce charnon est un charnon mâle, soit un charnon disposé entre deux charnons qui lui sont adjacent et qui sont des charnons mâles.

Ainsi, lors de l'étape de réalisation de la charnière, l'alignement axial se fait facilement par le recouvrement partiel (sur au plus 180°) des charnons mâles par la première enveloppe, puis, la formation proprement dite de la charnière se fait par le recouvrement de la partie des charnons mâles non encore recouverte par la deuxième enveloppe portée par l'élément rapporté, suivi de la fixation de l'élément rapporté au panneau portant la première enveloppe.

Selon un mode de réalisation particulier, le charnon femelle possède sur sa face latérale deux ouvertures latérales espacées angulairement l'une de l'autre. Chaque ouverture latérale est délimitée angulairement par un premier bord latéral formant une extrémité latérale de la première enveloppe, et par un deuxième bord latéral faisant face au premier bord latéral et formant une extrémité latérale de la deuxième enveloppe. Quelle que soit la position relative des deux panneaux, chaque ouverture latérale débouche face à un orifice réalisé dans un panneau.

Ainsi, du fait que les bords latéraux de chacune des deux ouvertures latérales du charnon femelle sont constitués par les extrémités latérales des deux enveloppes, le passage des câbles dans la charnière peut se faire très simplement. En effet, quand la charnière femelle est incomplète, seule la première enveloppe recouvre partiellement les charnons mâles et la charnière femelle est limitée latéralement par les deux extrémités latérales de la première enveloppe qui forment chacune un bord latéral d'une ouverture latérale. Il suffit donc de déposer les câbles transversalement à l'axe d'articulation de sorte qu'ils fassent saillie hors de chacun des deux bords latéraux de la première enveloppe et ensuite de fixer l'élément rapporté de façon à amener les extrémités latérales de la deuxième enveloppe face aux extrémités latérales de la première enveloppe et à former ainsi les ouvertures latérales.

Selon l'invention, le procédé de montage d'une charnière d'un appareil électroménager comportant deux panneaux articulés entre eux par la charnière, comporte une première étape pendant laquelle un premier panneau qui comporte au moins un charnon mâle, est amené contre le deuxième panneau comportant au moins une première enveloppe, une deuxième étape pendant laquelle un élément rapporté qui comporte au moins une deuxième enveloppe, est amené contre le premier panneau, et une troisième étape pendant laquelle l'élément rapporté est solidarisé au deuxième panneau de sorte que les deux enveloppes forment un charnon femelle emprisonnant au moins une extrémité axiale adjacente d'un charnon mâle du premier panneau. Le procédé est caractérisé en ce que, lors de la première étape, chaque extrémité axiale de la première enveloppe, qui est adjacente à un charnon, recouvre l'extrémité axiale adjacente d'un charnon mâle du premier panneau, en ce que, lors de la deuxième étape, chaque extrémité axiale de la deuxième enveloppe, qui est adjacente à un charnon, recouvre l'extrémité axiale adjacente d'un charnon mâle du premier panneau, et en ce que, lors de la troisième étape, chaque extrémité axiale du charnon femelle, qui est adjacente à un charnon, emprisonne l'extrémité axiale adjacente d'un charnon mâle du premier panneau.

D'autres particularités et avantages apparaîtront dans la description qui va suivre.

Aux dessins donnés à titre d'exemple non limitatif :
- la figure 1 est une vue en perspective de trois quart avant d'un appareil conforme à la présente invention ;
- la figure 2 est une vue similaire à la figure 1, l'appareil étant vu de trois quart arrière ;
- la figure 3 est une vue en perspective de l'élément rapporté muni de deux ressorts ;
- la figure 4 est une vue en perspective agrandie de la charnière, l'élément rapporté étant en cours de solidarisation ;
- la figure 5 est une vue en coupe de l'appareil selon un plan normal à l'axe d'articulation, sans l'élément rapporté, les deux panneaux formant entre eux un angle proche de 0°
- la figure 6 est une vue semblable à la figure 5, les deux panneaux formant entre eux un angle proche de 90° ;
- la figure 7 est une vue en perspective de l'appareil, les deux panneaux formant entre eux un angle proche de 90°, l'élément rapporté n'étant pas encore solidarisé à l'appareil ;
- la figure 8 est une vue en coupe agrandie similaire à la figure 6, l'appareil étant muni de l'élément rapporté ;
- la figure 9 est une vue en coupe schématique d'une charnière ;
- la figure 10 est une vue en perspective d'une extrémité axiale du charnon femelle et de l'extrémité axiale adjacente du charnon mâle correspondant ; et
- la figure 11 est une vue de face d'une extrémité axiale du charnon femelle et de l'extrémité axiale adjacente d'un charnon mâle correspondant.

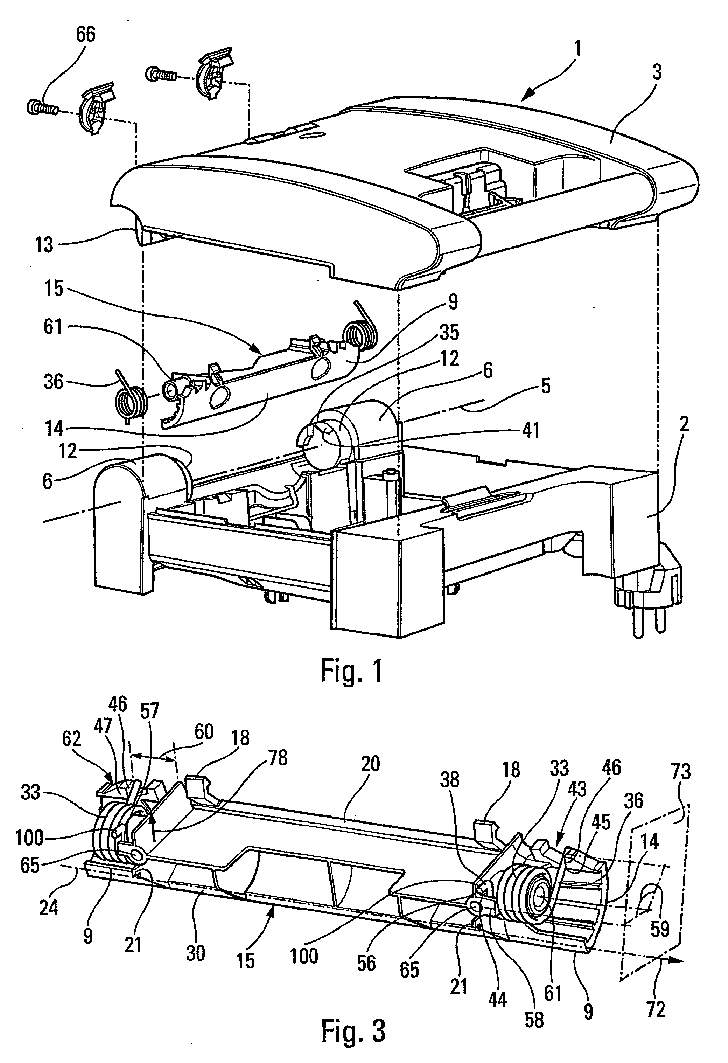

Comme on peut le voir à la figure 1, un appareil 1 comporte deux panneaux 2,3 articulés entre eux par une charnière 4. La charnière 4 s'étend selon un axe d'articulation 5 et comporte deux charnons latéraux 6 solidarisés au premier panneau 2 et un charnon central 7 solidarisé au deuxième panneau 3 et disposé selon la direction axiale entre les charnons latéraux 6.

Dans le présent exemple, l'appareil 1 est un appareil électrique du type gaufrier, et les deux panneaux 2,3 sont constitués par les deux capots 2,3 qui sont mobiles entre eux autour de l'axe d'articulation 5, entre une position ouverte et une position fermée. Chaque capot 2,3 comprend un sous-ensemble chauffant qui est adapté à recevoir et à cuire (ou à griller) un aliment, une coquille qui forme le corps du capot 2,3 et qui est adapté à servir de support au sous-ensemble chauffant, et des moyens de liaison qui sont adaptés à fixer le sous-ensemble chauffant à la coquille correspondante.

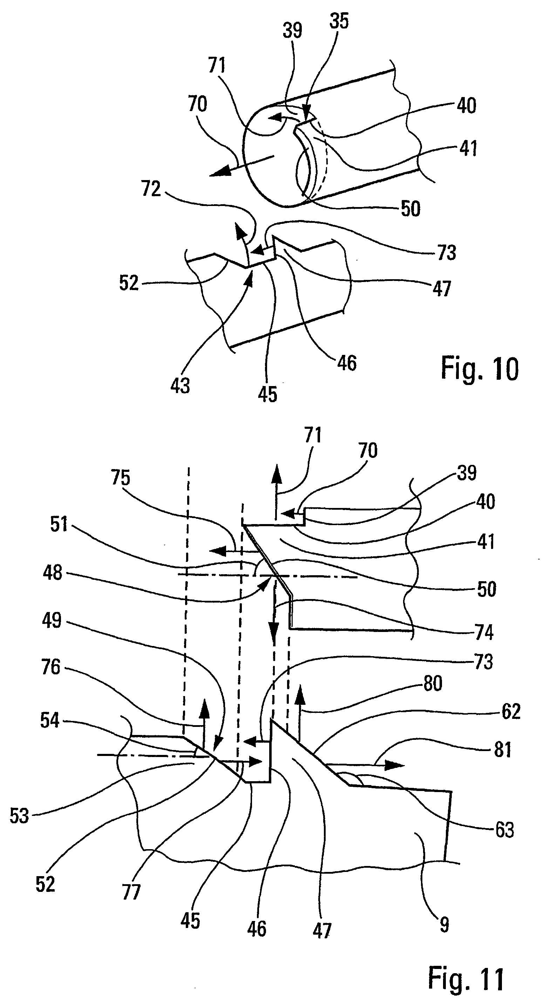

Selon l'invention, et comme illustré à la figure 9, chaque extrémité axiale 11 du charnon central 7 et l'extrémité axiale intérieure 12 du charnon latéral 6 correspondant se recouvrent. Le terme « intérieure » dans l'expression « extrémité axiale intérieure 12 » signifie « adjacent au charnon central 7 », par opposition à l'extrémité axiale extérieure qui forme une extrémité axiale de la charnière 4.

Ainsi, les charnons latéraux 6 forment soit des charnons mâles, soit des charnons femelles, le charnon central 7 formant, respectivement, le charnon femelle ou le charnon mâle correspondant. Dans le présent exemple, comme on peut le voir à la figure 1, chaque charnon latéral 6 forme un charnon mâle 6, et le charnon central 7 forme un charnon femelle 7, chaque extrémité axiale 11 du charnon femelle 7 recouvrant l'extrémité axiale adjacente 12 du charnon mâle 6 correspondant.

Bien évidemment, afin de permettre l'articulation des deux panneaux 2,3, chaque extrémité axiale 11 du charnon femelle 7 recouvrant l'extrémité axiale adjacente 12 d'un charnon mâle 6, et l'extrémité axiale adjacente 12 de chaque charnon mâle 6 recouvert par une extrémité axiale 11 du charnon femelle 7 sont de configuration cylindrique, dont l'axe est l'axe d'articulation 5.

Bien évidemment, le diamètre externe de l'extrémité axiale adjacente 12 de chaque charnon mâle 6 est légèrement inférieur au diamètre interne de l'extrémité axiale 11 correspondante du charnon femelle 7.

Chaque extrémité axiale 11 d'un charnon femelle 7 (en l'occurrence, chaque extrémité axiale 11 du charnon central 7) emprisonne l'extrémité axiale adjacente 12 du charnon mâle 6 correspondant (en l'occurrence l'extrémité axiale adjacente 12 du charnon latéral 6 correspondant). De ce fait, l'extrémité axiale adjacente 12 de chaque charnon mâle 6 ne peut sortir hors de l'enceinte constituée par l'extrémité axiale 11 correspondante du charnon femelle 7.

Dans le présent exemple, chaque charnon mâle 6 est solidaire du premier panneau 2, et, plus précisément, monobloc avec le premier panneau 2.

Chaque charnon femelle 7 comprend une première enveloppe 13 et une deuxième enveloppe 14.

La première enveloppe 13 est solidaire du panneau auquel est fixé le charnon femelle 7 (en l'occurrence, le deuxième panneau 3). Chaque extrémité axiale 8 de la première enveloppe 13 forme une partie d'un cylindre qui recouvre partiellement l'extrémité axiale adjacente 12 du charnon mâle 6 correspondant.

Bien évidemment, afin de permettre la réalisation du recouvrement de l'extrémité axiale adjacente 12 de chaque charnon mâle 6, l'extrémité axiale 8 correspondante de la première enveloppe 13 recouvre l'extrémité axiale adjacente 12 correspondante sur au plus 180°.

La deuxième enveloppe 14 est solidaire d'un élément rapporté 15. Chaque extrémité axiale 9 de la deuxième enveloppe 14 forme une autre partie du même cylindrique qui recouvre partiellement l'extrémité adjacente 12 du charnon mâle 6 correspondant.

Bien évidemment, afin de permettre la réalisation du recouvrement de l'extrémité axiale adjacente 12 de chaque charnon mâle 6, l'extrémité axiale 9 correspondante de la deuxième enveloppe 14 recouvre l'extrémité axiale adjacente 12 correspondante sur au plus 180°.

Dans le présent exemple, la première enveloppe 13 forme une première partie de cylindre dont l'axe est l'axe d'articulation 5, et la deuxième enveloppe 14 forme une deuxième partie de ce même cylindre, complémentaire de la première partie de cylindre.

Dans le présent exemple, la première enveloppe 13 est monobloc avec le deuxième panneau 3, et la deuxième enveloppe est monobloc avec l'élément rapporté 15.

Le panneau portant la première enveloppe 13 (en l'occurrence, le deuxième panneau 3) comporte des moyens de fixation 19 qui sont adaptés à coopérer avec des moyens complémentaires de fixation 18 solidaires de l'élément rapporté 15 de façon à solidariser l'élément rapporté 15 au panneau portant la première enveloppe 13 (en l'occurrence, le deuxième panneau 3) et à réaliser le charnon femelle 7 (en l'occurrence, le charnon central 7) dont chaque extrémité axiale 11 recouvre l'extrémité axiale adjacente 12 du charnon mâle 6 correspondant (en l'occurrence, du charnon latéral 6 correspondant).

Le processus de montage d'une charnière 4 selon la présente invention est le suivant :
- le deuxième panneau 3 est amené contre le premier panneau 2, chaque extrémité axiale 8 de la première enveloppe 13 recouvrant l'extrémité axiale adjacente 12 du charnon mâle 6 correspondant.
- l'élément rapporté 15 est amené contre le premier panneau 2, chaque extrémité axiale 9 de la deuxième enveloppe 14 recouvrant l'extrémité adjacente 12 du charnon mâle 6 correspondant.
- l'élément rapporté 15 est solidarisé au deuxième panneau 3, chaque extrémité axiale 11 du charnon femelle 7 (formée par les extrémités 8,9 axiales correspondantes des deux enveloppes 13,14) emprisonnant l'extrémité adjacente 12 du charnon mâle 6.

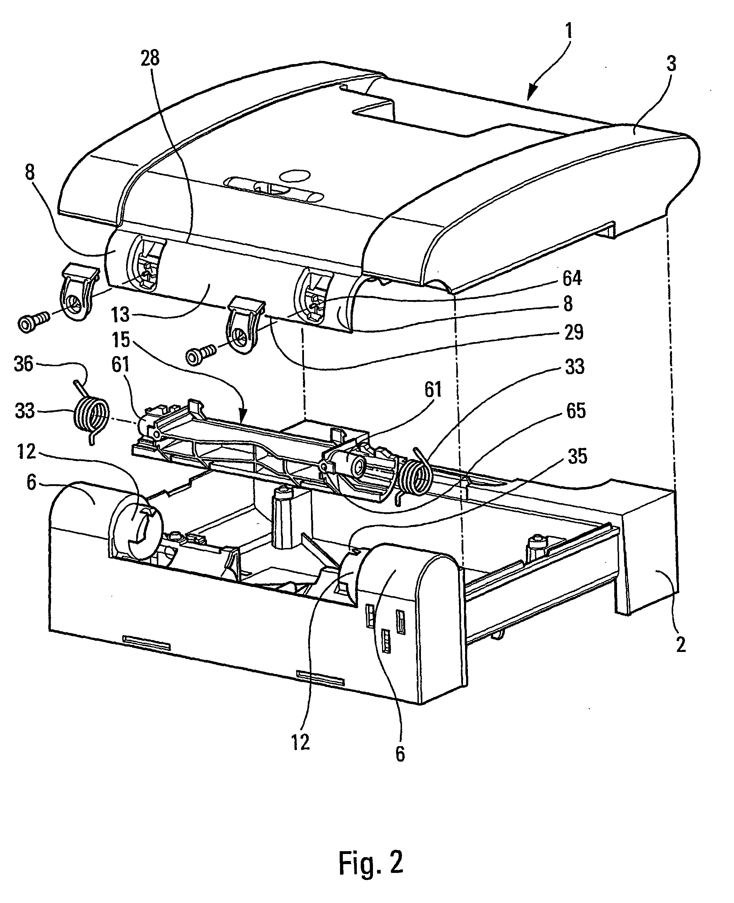

Dans l'exemple illustré aux figures 1 à 11, les moyens de fixation 19 et les moyens complémentaires de fixation 18 coopèrent par encliquetage.

Au moins un crochet 18 est fixé de façon élastique à l'une des deux enveloppes 13,14 et est adapté à pénétrer dans un logement 19 porté par l'autre enveloppe 14,13 afin de réaliser l'encliquetage.

En l'occurrence, la pièce apportée 15 comprend deux crochets 18, chaque crochet 18 étant disposé, dans la direction axiale, proche d'une extrémité axiale 9 correspondante de la deuxième enveloppe 14. Chaque crochet 18 fait saillie au-delà d'une première extrémité latérale 20 de la deuxième enveloppe 14 selon une direction normale à l'axe d'articulation 5 et de façon sensiblement tangente à la deuxième enveloppe 14.

Au moins une patte 21 est fixée à l'une des deux enveloppes 13,14 et est adaptée à pénétrer dans une cavité 22 portée par l'autre enveloppe 14,13 et à prendre appui contre une paroi axiale (c'est à dire parallèle à l'axe d'articulation 5) de cette cavité 22 de façon à former un point d'appui facilitant l'encliquetage de l'élément rapporté 15 par rotation autour d'un axe d'encliquetage 24 défini par les points d'appui et parallèle à l'axe d'articulation 5.

En l'occurrence, la pièce rapportée 15 comprend deux pattes 21, chaque patte 21 étant adaptée à pénétrer dans une cavité 22 réalisée dans la première enveloppe 13. Chaque patte 21 est disposée, selon la direction axiale, sensiblement à la même position que le crochet 18 correspondant. Chaque patte 21 fait saillie au-delà de l'élément rapporté 15 selon une direction normale à l'axe d'articulation 5, et est située quasiment diamétralement opposée au crochet 18 correspondant.

Le processus d'encliquetage de l'élément rapporté 15 au deuxième panneau 13 faisant suite au rapprochement de l'élément rapporté 15 comme indiqué précédemment, est le suivant :
- chaque patte 21 est introduite dans la cavité 22 correspondante,
- l'élément rapporté 15 est pivoté par rapport à l'axe d'encliquetage 24, chaque patte 21 étant en appui contre la paroi axiale correspondante,
- par ce pivotement, chaque crochet 18 se rapproche du logement 19 correspondant, puis s'encliquette à l'intérieur de celui-ci.

De plus, chaque patte 21 pénétrant dans la cavité 22 correspondante constitue un moyen de fixation complémentaire de l'élément rapporté 15.

Selon un mode particulier, tel que celui illustré par les figures 1 à 11, la première enveloppe 13 comporte deux ouvertures de fixation 64 et l'élément rapporté 15 comporte deux ouvertures complémentaires de fixation 65, chacune de ces ouvertures complémentaires de fixation 65 prolongeant une ouverture de fixation 64 quand l'élément rapporté 15 est fixé au deuxième panneau 13. De préférence, chaque ouverture complémentaire de fixation 65 est réalisée dans le prolongement d'une patte 21.

Par cette disposition particulière, une fois l'élément rapporté 15 fixé au deuxième panneau 13 par encliquetage, la rigidité du charnon femelle 7 peut être augmentée en introduisant une vis 66 dans chaque couple formé par une ouverture de fixation 64 et l'ouverture complémentaire de fixation 65 correspondante.

Dans l'exemple particulier illustré aux figures 1 à 11, afin de faciliter le montage de la charnière 4, le premier panneau 2 comprend une butée 90 disposée en face du charnon femelle 7 quand la charnière 4 est réalisée, c'est à dire entre les charnons mâles 6 portés par le premier panneau 2.

La butée 90 est disposée à une certaine distance radiale des extrémités axiale adjacente 12 de chaque charnon mâle 6, cette distance étant sensiblement supérieure à l'épaisseur de la première enveloppe 13. Ainsi, la butée 90 est adaptée, lors du rapprochement des deux panneaux 2,3, à guider la première enveloppe 13 de sorte que celle-ci recouvre partiellement chaque extrémité axiale adjacente 12 du charnon mâle 6 correspondant.

La butée 90 est aussi adaptée à recevoir en butée le premier panneau 2 quand il est en position ouverte en porte-à-faux permettant l'insertion de l'élément rapporté 15 entre les deux panneaux 2,3 et la fixation de l'élément rapporté 15 au deuxième panneau 3.

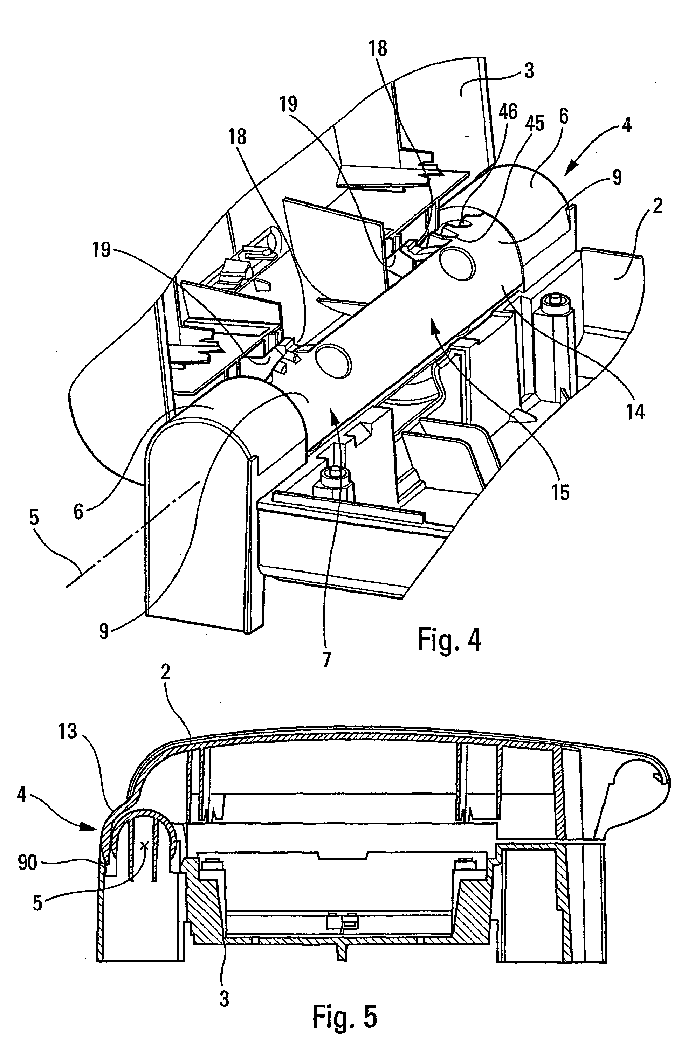

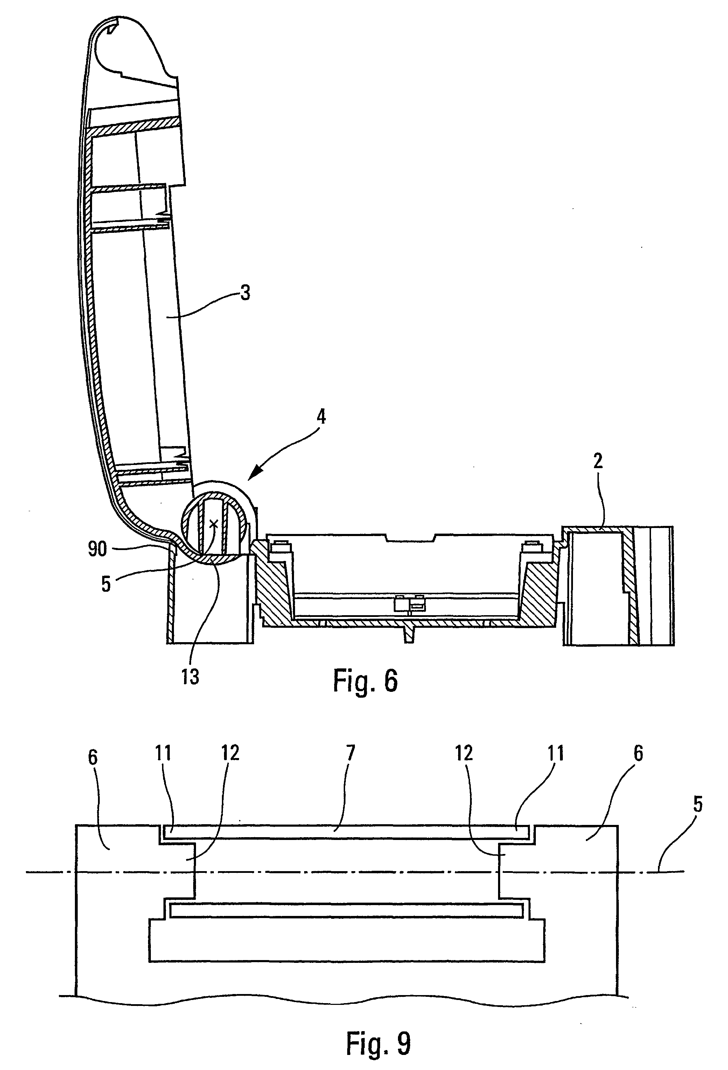

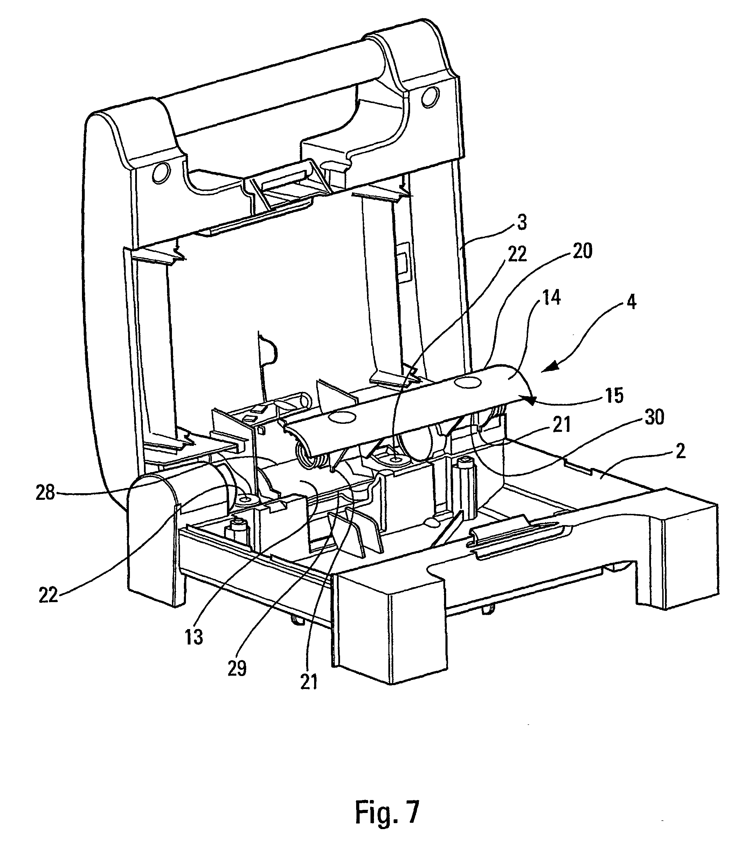

Le montage de la charnière est alors le suivant :
- le deuxième panneau 3 est amené contre le premier panneau 2. Dans le présent exemple, comme illustré à la figure 5, les deux panneaux 2,3 sont dans leur position fermée,
- comme on peut le voir à la figure 6, le deuxième panneau 3 est pivoté par rotation des extrémités axiales 8 de la première enveloppe 13 autour des extrémités axiales adjacentes 12 correspondantes des charnons mâles 6. Le deuxième panneau 3 est maintenu en porte-à-faux dans la position ouverte à 90° (sans que la charnière 4 soit réalisée et sans qu'il soit nécessaire qu'un quelconque outil ne le maintienne dans cette position), d'une part, par les extrémités axiales 8 de la première enveloppe 13 qui sont en butée contre les extrémités axiales adjacentes 12 correspondantes des charnons mâles 6, et, d'autre part, par la butée 90 du premier panneau 2 contre laquelle repose le deuxième panneau 3,
- comme on peut le voir à la figure 7, l'élément rapporté 15 est amené contre le premier panneau 2 du côté du secteur angulaire de 90° formé par les deux panneaux 2,3.

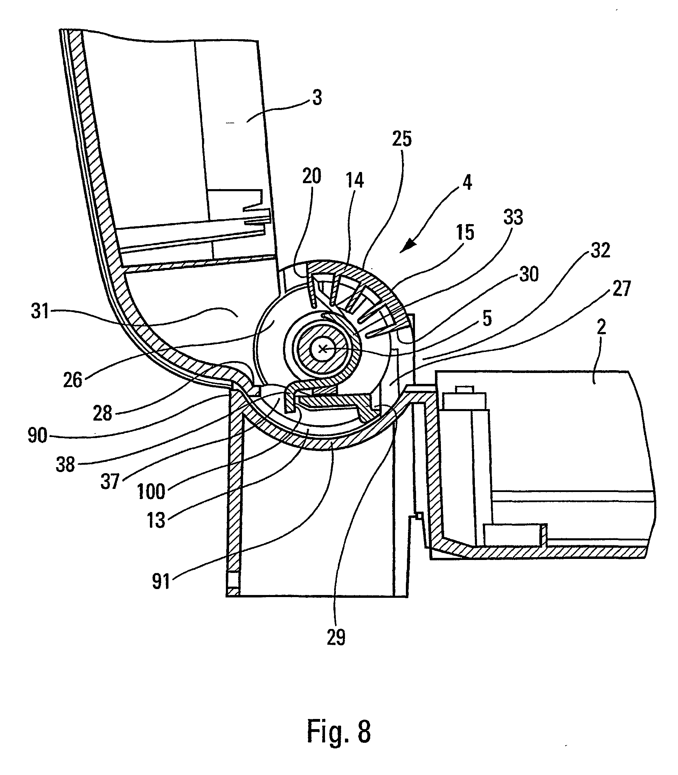

Dans l'exemple particulier illustré, comme on peut le voir à la figure 8, la butée 90 est une extrémité latérale d'une paroi 91 joignant la base des deux charnons mâles 6 et de conformation cylindrique permettant d'épouser la forme extérieure cylindrique de la première enveloppe 13.

Dans l'exemple particulier illustré aux figures 1 à 11, l'appareil qui est du type gaufrier comprend des câbles électriques adaptés à connecter le sous-ensemble chauffant de chaque panneau 2,3 à un dispositif de commande électrique logé dans un des deux panneaux. De ce fait, les câbles connectant les deux panneaux 2,3 passent à travers la charnière 4.

Selon un mode de réalisation particulier, de façon à permettre le passage de câbles reliant les deux panneaux 2,3 à travers la charnière 4, le charnon femelle 7 (en l'occurrence, le charnon central 7) possède deux ouvertures latérales 26,27 sur sa face latérale 25. Les deux ouvertures latérales 26,27 sont espacées angulairement l'une de l'autre.

Chaque ouverture latérale 26,27 est délimitée angulairement, d'une part, par un premier bord latéral 28,29 qui forme une extrémité latérale 28,29 de la première enveloppe 13, et, d'autre part, par un deuxième bord latéral 20,30 qui fait face au premier bord latéral 28,29 et qui forme une extrémité latérale 20,30 de la deuxième enveloppe 14.

La première ouverture latérale 26 comporte un premier bord latéral 28 qui est une première extrémité latérale 28 de la première enveloppe 13, et un deuxième bord latéral 20 qui fait face au premier bord latéral 28 et qui est la première extrémité latérale 20 de la deuxième enveloppe 14. On peut noter que les logements 19 dans lesquels les crochets 18 sont adaptés à s'encliqueter, sont situés à proximité de la première extrémité latérale 26 de la première enveloppe 13.

La deuxième ouverture latérale 27 comporte un premier bord latéral 29 qui est la deuxième extrémité latérale 29 de la première enveloppe 13, et un deuxième bord latéral 30 qui fait face au deuxième bord latéral 30 et qui est la deuxième extrémité latérale 30 de la deuxième enveloppe 14. On peut noter que les cavités 22 dans lesquelles les pattes 21 sont adaptées à pénétrer, sont disposées à proximité de la deuxième extrémité latérale 29 de la première enveloppe 13.

Bien évidemment, quelle que soit la position relative des deux panneaux 2,3, chaque ouverture latérale 26,27 débouche face à un orifice 31,32 réalisé dans un panneau 2,3. Plus précisément, la deuxième ouverture latérale 27 débouche face à au moins une portion d'un deuxième orifice 32 réalisé dans le premier panneau 2, quelle que soit la position angulaire des deux panneaux 2,3. En ce qui concerne la première ouverture latérale 26, il est évident qu'elle débouche toujours face à au moins une portion d'un premier orifice 31 réalisé dans le deuxième panneau 3 étant donné que les deux ouvertures latérales 26,27 sont réalisés dans le charnon femelle 7, et sont donc solidaires du deuxième panneau 3.

Le processus de mise en place des câbles, une fois l'extrémité axiale adjacente 12 de chaque charnon mâle 6 recouverte par l'extrémité axiale 8 correspondante de la première enveloppe 13, est le suivant :
- les câbles sont disposés de façon à traverser la première enveloppe 13, de la première extrémité latérale 28 à la deuxième extrémité latérale 29,
- l'élément rapporté 15 est amené contre le premier panneau 2 de sorte que chaque extrémité axiale 9 de la deuxième enveloppe 14 recouvre l'extrémité adjacente 12 du charnon mâle 6 correspondant, la première extrémité latérale 20 de la deuxième enveloppe 14 faisant face à la première extrémité latérale 28 de la première enveloppe 13, et la deuxième extrémité latérale 30 de la deuxième enveloppe 14 faisant face à la deuxième extrémité latérale 29 de la première enveloppe 13,
- l'élément rapporté 15 est fixé au deuxième panneau 3, et les ouvertures latérales 26,27 sont formées, les câbles traversant la charnière 4.

Selon un mode de réalisation particulier, la charnière 4 est munie d'au moins un ressort de torsion 33 adapté à solliciter en permanence les deux panneaux 2,3 dans une position angulaire relative prédéterminée.

En l'occurrence, la charnière est munie de deux ressorts de torsion 33 adaptés à solliciter en permanence les deux panneaux 2,3 vers leur position ouverte.

La charnière 4 comprend des moyens d'appui définitif adaptés, quand la charnière 4 est réalisée, à recevoir au moins un ressort de torsion 33 adapté à solliciter en permanence les deux panneaux 2,3 vers leur position prédéterminée.

Pour chaque ressort 33, les moyens d'appui définitif sont disposés à proximité de la zone de recouvrement du charnon mâle 6 correspondant par le charnon femelle 7. Chaque moyen d'appui définitif comprend un premier logement définitif 35 et un deuxième logement définitif 37.

Chaque premier logement définitif 35 est solidaire du charnon mâle 6 correspondant et il est adapté à recevoir une première extrémité 36 du ressort 33 correspondant. Chaque deuxième logement définitif 37 est solidaire du charnon femelle 7 et il est adapté à recevoir une deuxième extrémité 38 du ressort 33 correspondant.

Chaque premier logement définitif 35 est formé, d'une part, par un bord transversal d'appui définitif 39 et, d'autre part, par un bord axial d'appui définitif 40.

Chaque bord transversal d'appui définitif 39 est sensiblement perpendiculaire à l'axe d'articulation 5 et est orienté en direction du centre de l'élément rapporté 15 comme l'indique la flèche 70.

Chaque bord axial d'appui définitif 40 est porté par une dent 41 qui fait saillie hors du bord transversal d'appui définitif 39, qui s'étend selon la direction axiale. Chaque bord axial d'appui définitif 40 est orienté dans un premier sens angulaire, comme l'indique la flèche 71, de sorte que chaque ressort 33 sollicite les deux panneaux 2,3 en direction de leur position angulaire prédéterminée quand la première extrémité 36 de chaque ressort 33 est en butée contre le bord axial d'appui définitif 40 correspondant, la deuxième extrémité 38 du même ressort 33 étant par ailleurs disposée dans le deuxième logement définitif 37.

Le processus de montage de la charnière 4 munie de ressorts 33 sollicitant en permanence les deux panneaux 2,3 dans une position angulaire relative prédéterminée, une fois l'extrémité axiale adjacente 12 de chaque charnon mâle 6 recouverte par l'extrémité axiale 8 correspondante de la première enveloppe 13, est le suivant :
- simultanément à la mise en place de l'élément rapporté 15, chaque ressort 33 est introduit dans la charnière 4 de sorte que la première extrémité 36 de chaque ressort 33 est située dans le premier logement définitif 35 réalisé dans le charnon mâle 6 correspondant et la deuxième extrémité 38 de chaque ressort 33 est située dans le deuxième logement définitif 37 réalisé dans le charnon femelle 6.

De plus, dans le présent mode de réalisation particulier, chaque ressort 33 est compressible dans la direction longitudinale 72 qui est la direction normale au plan 73 défini par l'élasticité angulaire du ressort 33 correspondant.

L'élément rapporté 15 comprend, pour chaque ressort 33, des moyens d'appui transitoire adaptés, quand l'élément rapporté 15 est désolidarisé du deuxième panneau 3, à recevoir le ressort 33 correspondant et à le maintenir solidaire de l'élément rapporté 15 de façon sensiblement comprimé longitudinalement et angulairement.

Pour chaque ressort 33, les moyens d'appui transitoire sont disposés à proximité de la zone de recouvrement du charnon mâle 6 correspondant par le charnon femelle 7. Chaque moyen d'appui transitoire comprend un premier logement transitoire 43 et un deuxième logement transitoire 44.

Chaque premier logement transitoire 43 est adapté à recevoir la première extrémité 36 du ressort 33 correspondant. Chaque deuxième logement transitoire 44 est adapté à recevoir la deuxième extrémité 38 du ressort 33 correspondant.

Chaque premier logement transitoire 43 est formé, d'une part, par un bord axial d'appui transitoire 45 et, d'autre part, par un bord transversal d'appui transitoire 46.

Chaque bord axial d'appui transitoire 45 est situé à proximité de l'extrémité axiale 9 correspondante de la deuxième enveloppe 14, s'étend selon la direction axiale, et est orienté, comme l'indique la flèche 72, dans le premier sens angulaire. En effet, quand la charnière 4 est réalisée, le bord axial d'appui transitoire 45 et le bord axial d'appui définitif 40 sont orientées dans la même sens angulaire.

Chaque bord transversal d'appui transitoire 46 est porté par un ergot 47 qui fait saillie, selon une direction perpendiculaire à l'axe d'articulation 5, hors du bord axial d'appui transitoire 45. Chaque bord transversal d'appui transitoire 46 est orienté en direction du centre de l'élément rapporté 15, comme indiqué par la flèche 73.

Pour chaque ressort 33, le charnon mâle 6 correspondant comprend des moyens de transfert 48 qui sont adaptés à coopérer avec des moyens complémentaires de transfert 49 solidaires de l'élément rapporté 15 de sorte que, pendant la solidarisation de l'élément rapporté 15 au deuxième panneau 3, le ressort 33 correspondant est comprimé longitudinalement et passe des moyens d'appui transitoire aux moyens d'appui définitif par encliquetage.

Chaque moyen de transfert 48 comprend un bord de transfert 50 qui est porté par la dent 41, et qui fait, avec l'axe d'articulation 5, un angle de transfert 51 aigu. Chaque bord de transfert 50 est orienté, selon sa composante axiale, comme l'indique la flèche 74, dans le sens contraire du premier sens angulaire, la dent 41 étant limitée angulairement, d'une part, par le bord de transfert 50, et d'autre part, par le bord axial d'appui définitif 40. Chaque bord de transfert 50 est orienté, selon sa composante transversale, en direction du centre de l'élément rapporté 15, comme l'indique la flèche 75.

Chaque bord de transfert 50 s'étend, selon la direction axiale dans le sens vers l'extérieur de la charnière 4, au-delà du bord transversal d'appui transitoire 46, quand la charnière 4 est réalisée. De cette façon le bord de transfert 50 peut décoller la première extrémité 36 du ressort 33 correspondant hors du bord transversal d'appui transitoire 46 correspondant.

Chaque moyen complémentaire de transfert 49 comprend un bord de poussée 52 qui s'étend selon la direction axiale. Le bord de poussée 52 est orienté, selon sa composante axiale, comme l'indique la flèche 76, dans le premier sens angulaire, le bord de poussée 52 prolongeant le bord axial d'appui transitoire 45 vers l'intérieur de l'élément rapporté 15.

Chaque bord de poussée 52 s'étend, selon la direction axiale dans le sens vers l'intérieur de la charnière 4, au delà de l'extrémité libre du bord de transfert 50, quand la charnière 4 est réalisée. De cette façon le bord de poussée 52 peut comprimer le ressort 33 correspondant de sorte que sa première extrémité 36 puisse contourner la dent 41 correspondante.

Chaque bord de poussée 52 est porté par un élément 53 qui fait saillie, selon une direction perpendiculaire à l'axe d'articulation 5, hors du bord axial d'appui transitoire 45. Chaque bord de poussée 52 fait, avec l'axe d'articulation 5, un angle de poussée 54 aigu qui est plus petit que l'angle de transfert 51 correspondant. Le bord de poussée 52 est orienté, selon sa composante transversale, en direction de l'extrémité axiale 9 correspondante de la deuxième enveloppe 14, comme l'indique la flèche 77.

Par ailleurs, chaque deuxième logement transitoire 44 est formé par un bord transversal 56 et par un bord axial 57.

Le bord transversal 56 est sensiblement perpendiculaire à l'axe d'articulation 5, il est disposé plus à l'intérieur de l'élément rapporté 15 que ne l'est le bord transversal d'appui transitoire 46 correspondant, et il est orienté vers l'extrémité axiale 9 correspondante de la deuxième enveloppe 14.

Le bord transversal 56 et le bord transversal d'appui transitoire 46 sont séparés dans la direction axiale l'un de l'autre d'une distance 60 légèrement inférieure à la distance séparant les deux extrémités du ressort 33 quand celui-ci est sans contrainte longitudinale.

Le bord axial 57 est porté par une patte 58 qui fait saillie hors du bord transversal 56. Le bord axial 57 s'étend selon la direction axiale, et il est orienté dans le sens contraire du premier sens angulaire, comme l'indique la flèche 78. En effet, le bord axial 57 fait face au bord axial d'appui transitoire 45 afin de permettre la compression angulaire du ressort 33.

Le bord axial 57 et le bord axial d'appui transitoire 45 forment un secteur angulaire 59 légèrement inférieur à l'angle formé par les deux extrémités du ressort 33 quand celui-ci est sans contrainte angulaire.

De cette façon, quand la première extrémité 36 d'un ressort 33 est logée dans le premier logement transitoire 43 correspondant et la deuxième extrémité 38 de ce même ressort 33 est logée dans le deuxième logement transitoire 44 correspondant, le ressort 33 se trouve légèrement comprimé angulairement et longitudinalement. La contrainte longitudinale du ressort 33 n'est que très légère afin de permettre le contournement de la dent 41 correspondante par compression longitudinale du ressort 33 suivie d'un encliquetage.

Par ailleurs, un doigt 61 fait saillie hors du bord transversal 56 vers l'extrémité axiale 9 correspondante de la deuxième enveloppe 14 et est adapté à recevoir en butée le ressort 33 correspondant afin de le maintenir solidaire de l'élément rapporté 15 quand il est sous contrainte angulaire. En l'occurrence, le doigt 61 est adaptée à être disposé à l'intérieur des spires du ressort 33 correspondant qui est du type à spires non-jointives.

Le processus de mise en place de chaque ressort 33 dans la charnière 34, résultant de la coopération entre, pour chaque ressort 33, la première extrémité 36 du ressort 33, le premier logement définitif 35, le premier logement transitoire 43, le bord de transfert 50 et le bord de poussée 52, une fois l'extrémité axiale intérieure 12 de chaque charnon mâle 6 recouverte par l'extrémité axiale 8 correspondante de la première enveloppe 13, est le suivant :
- l'élément rapporté 15, muni de l'ensemble des ressorts 33, chacun disposé dans ses moyens d'appui transitoire respectif, est amené contre le premier panneau 2, la première extrémité 36 de chaque ressort 33 étant en appui contre le bord axial d'appui transitoire 45 correspondant et le bord transversal d'appui transitoire 46 correspondant, les panneaux 2,3 étant dans une position angulaire relative proche de la position angulaire relative prédéterminée dans laquelle les deux panneaux 2,3 sont sollicités par chaque ressort 33 (en l'occurrence, proche de leur position ouverte dans laquelle ils forment entre eux un angle proche de 90°),
- l'élément rapporté 15 arrive dans une position de contact dans laquelle la première extrémité 36 de chaque ressort 33 entre en contact contre le bord de transfert 50 correspondant,
- le mouvement de rapprochement de l'élément rapporté 15 est poursuivi, vu l'orientation de chaque bord de transfert 50, de chaque bord transversal d'appui transitoire 46 et de chaque bord de poussée 52, et vu que chaque angle de poussée 54 est plus petit que l'angle de transfert 51 correspondant, la première extrémité 36 du ressort 33 correspondant est décollée du bord transversal d'appui transitoire 46 correspondant puis coulisse le long du bord de transfert 50 correspondant, ce qui comprime longitudinalement le ressort 33 correspondant,
- l'élément rapporté 15 arrive dans une position de transfert dans laquelle la première extrémité 36 de chaque ressort 33 dépasse l'extrémité libre de la dent 41 correspondante (qui correspond à l'extrémité libre commune du bord de transfert 50 correspondant et du bord axial d'appui définitif 40 correspondant) et, sous l'action de l'élasticité longitudinale du ressort 33 correspondant, la première extrémité 36 est plaquée contre le bord transversal d'appui définitif 39 correspondant. De ce fait, la première extrémité 36 de chaque ressort 33 est logée dans le premier logement définitif 35 correspondant.

En prolongeant le mouvement de rapprochement de l'élément rapporté 15 jusqu'à ce qu'il soit solidarisé au deuxième panneau 3 (en l'occurrence, jusqu'à ce que les crochets 18 s'encliquettent dans les logements 19), le bord de poussée 52 et le bord axial d'appui transitoire 45 dépassent angulairement le bord axial d'appui définitif 40 : selon le premier sens angulaire, le bord axial d'appui transitoire 45 est plus proche du deuxième logement définitif 37 que ne l'est le bord axial d'appui définitif 40. De ce fait, la première extrémité 36 du ressort 33 est à nouveau en appui contre le bord axial d'appui transitoire 45.

Toutefois, étant donné que, pendant la fixation de l'élément rapporté 15, les panneaux 2,3 sont dans la position que doit leur imposer chaque ressort 33, cette disposition relative du bord axial d'appui transitoire 45 et bord axial d'appui définitif 40 n'est pas gênante. Lors du mouvement relatif des panneaux 2,3 dans le sens contraire de celui imposé par chaque ressort 33, c'est à dire dans le sens opposé au premier sens angulaire (en l'occurrence, lors de la fermeture des panneaux 2,3), le bord axial d'appui transitoire 45 est pivoté dans le sens opposé au premier sens angulaire et le bord axial d'appui transitoire 45 devient plus éloigné du deuxième logement définitif 37 que ne l'est le bord axial d'appui définitif 40. La première extrémité 36 du ressort 33, sous l'action de l'élasticité angulaire du ressort vient en butée contre le bord axial d'appui définitif 40, l'élasticité longitudinale du ressort 33 plaquant la première extrémité 36 du ressort 33 contre le bord transversal d'appui définitif 39 l'empêchant de contourner la dent 41.

Plus l'angle de poussée 54 est important, plus le coulissement de la première extrémité 36 du ressort 33 le long de la dent 41 est rapide pour une même amplitude du mouvement de rapprochement de l'élément rapporté 15.

Dans le présent exemple, la deuxième extrémité 38 de chaque ressort 33 a la forme d'un crochet de sorte que, lors de la mise en place des ressorts 33, l'extrémité libre 100 du crochet, faisant saillie hors du deuxième logement transitoire 44 correspondant, pénètre dans le deuxième logement définitif 37 correspondant.

En l'occurrence, dans le présent exemple, le processus de mise en place de chaque ressort 33 dans la charnière 34, est le suivant :
- l'élément rapporté 15 est amené contre le premier panneau 2, l'extrémité libre saillante 100 de la deuxième extrémité 38 de chaque ressort 33 pénétrant dans le deuxième logement définitif 37 correspondant et chaque patte 21 étant introduite dans la cavité 22 correspondante et,
- l'élément rapporté 15 est pivoté autour de l'axe d'encliquetage de sorte que la première extrémité 36 de chaque ressort 33 s'encliquète dans le premier logement définitif 35 correspondant.

Bien évidemment, la présence des points d'appui définissant l'axe d'encliquetage 24 facilite le mouvement de rapprochement de l'élément rapporté 15 et le transfert des première et deuxième extrémités 36,38 de chaque ressort 33.

Ainsi, la mise en place de chaque ressort 33 dans les moyens d'appui définitif se fait pendant la fixation de l'élément rapporté 15 au deuxième panneau 3, aucune manipulation spécifique étant nécessaire. Il suffit de mettre chaque ressort 33 sous précontrainte longitudinale et angulaire afin de l'immobiliser dans l'élément rapporté 15.

De plus, dans l'exemple illustré, l'élément rapporté 15 comprend, pour chaque ressort 33, un bord de précontrainte 62 qui est adapté, quand la deuxième extrémité 38 du ressort 33 est dans le deuxième logement transitoire 44, à permettre le positionnement de la première extrémité 36 de ce même ressort 33 dans le premier logement transitoire 43 par encliquetage.

Le bord de précontrainte 62 est porté par l'ergot 47, il fait, avec l'axe d'articulation 5, un angle de précontrainte 63 aigu, et il est orienté selon sa composante axiale, comme l'indique la flèche 80, dans le sens du premier sens angulaire, le bord de précontrainte 62 et le bord axial d'appui transitoire 45 étant orientés dans le même sens angulaire.

L'élément de précontrainte 62 est orienté, selon sa composante transversale, dans le sens vers l'extérieur de l'élément rapporté 15, comme l'indique la flèche 81, et il s'étend, selon la direction axiale, au-delà du bord transversal d'appui transitoire 46 correspondant. L'ergot 47 est ainsi limité dans la direction axiale, d'une part, par le bord de précontrainte 62, et d'autre part, par le bord transversal d'appui transitoire 46.

Cette conformation particulière du premier logement transitoire 43, du deuxième logement transitoire 44 et du bord de précontrainte 62 permet d'insérer rapidement et facilement le ressort 33 correspondant dans l'élément rapporté 15, et de le comprimer de façon angulaire et longitudinale.

Le processus d'insertion du ressort 33 dans l'élément rapporté 15 est le suivant :
- la deuxième extrémité 38 de chaque ressort 33 est mis en butée contre le bord transversal 56 correspondant et le bord axial 57 correspondant du deuxième logement transitoire 43, les spires du ressort entourant le doigt 61, la première extrémité 36 de ce même ressort 33 étant disposée sur le bord de précontrainte 62 correspondant, le ressort 33 étant libre de toute contrainte aussi bien angulairement que longitudinalement.
- la première extrémité 36 coulisse le long du bord de précontrainte 62 correspondant, comprimant le ressort 33 aussi bien longitudinalement qu'angulairement
- la première extrémité 36 arrive dans une position d'encliquetage dans laquelle elle dépasse l'extrémité libre de l'ergot 47 correspondant (qui correspond à l'extrémité libre commune du bord de précontrainte 62 correspondant et du bord transversal d'appui transitoire 46) et, sous l'action de l'élasticité angulaire du ressort 33 correspondant, la première extrémité 36 du ressort 33 est plaquée contre le bord axial d'appui transitoire 45 correspondant. De ce fait, la première extrémité 36 du ressort 33 est logée dans le premier logement transitoire 43 correspondant.

En prolongeant le mouvement de compression longitudinale du ressort 33, la première extrémité 36 du ressort 33 correspondant dépasse dans la direction axiale le bord transversal d'appui transitoire 46. Toutefois, dès la pression relâchée, la première extrémité 36 du ressort 33, sous l'action de l'élasticité longitudinale du ressort 33, vient en butée contre le bord transversal d'appui transitoire 46, l'élasticité angulaire du ressort 33 plaquant la première extrémité 36 du ressort 33 contre le bord axial d'appui transitoire 45 l'empêchant de contourner l'ergot 47.

Bien évidemment, la présente invention n'est pas limitée au mode de réalisation illustré dans les figures annexées, de nombreuses modifications pouvant y être apportées

Il serait ainsi possible d'avoir un appareil comportant d'une part deux panneaux et d'autre part un socle, le socle et les deux panneaux étant articulés entre eux par une charnière conforme à la présente invention : Le premier panneau comporte alors deux charnons mâles extérieurs, le socle comportant un charnon mâle central, et le deuxième panneau comportant deux charnons femelles intermédiaires, chaque charnon intermédiaire étant disposé entre le charnon central et un charnon extérieur et comportant d'une part une première enveloppe, solidaire du deuxième panneau, et dont chaque extrémité axiale recouvre l'extrémité axiale du charnon mâle adjacent correspondant (l'une extrémité recouvre l'extrémité axiale du charnon central, l'autre recouvrant l'extrémité axiale du charnon extérieur), et d'autre part, une seconde enveloppe adaptée à être solidarisé au deuxième panneau, solidaire d'un élément rapporté, et dont chaque extrémité axiale recouvre l'extrémité axiale du charnon mâle adjacent correspondant.

## Revendications

1. Appareil électroménager (1) comportant deux panneaux (2,3) articulés entre eux par une charnière (4) qui s'étend selon un axe d'articulation (5) et qui comporte, d'une part, au moins un charnon mâle (6) solidarisé à un premier panneau (2), et, d'autre part, au moins un charnon femelle (7) solidarisé au deuxième panneau (3), disposé de façon adjacente dans le prolongement axial du charnon mâle (6), et comprenant, d'une part, une première enveloppe (13) solidarisée au deuxième panneau (3), et, d'autre part, une deuxième enveloppe (14) complémentaire solidarisée à un élément rapporté (15) qui comporte des moyens complémentaires de fixation (18) adaptés à coopérer avec des moyens de fixation (19) du deuxième panneau (3) de manière à solidariser l'élément rapporté (15) au deuxième panneau (3) et à réaliser le charnon femelle (7), **caractérisé en ce que** chaque extrémité axiale (11) du charnon femelle (7), qui est adjacente à un charnon, recouvre l'extrémité axiale (12) adjacente d'un charnon mâle (6), et est formée par l'extrémité axiale (8) correspondante de la première enveloppe (13) qui forme une partie de cylindre et par l'extrémité axiale (9) correspondante de la deuxième enveloppe (14) qui forme une autre partie complémentaire du même cylindre de manière à emprisonner l'extrémité axiale (12) du charnon mâle (6).

2. Appareil (1) selon la revendication 1, **caractérisé en ce que** la charnière (4) comporte deux charnons mâles (6) latéraux solidarisés au premier panneau (2) et un charnon femelle (7) central solidarisé au deuxième panneau (3), disposé axialement entre les charnons latéraux (7), et dont chaque extrémité axiale (11) emprisonne l'extrémité axiale (12) adjacente du charnon mâle (6) correspondant.

3. Appareil (1) selon la revendication 1 ou 2, **caractérisé en ce que** les moyens de fixation (19) et les moyens complémentaires de fixation (18) coopèrent par encliquetage.

4. Appareil (1) selon la revendication 3, **caractérisé en ce qu'**au moins un crochet (18) est fixé de façon élastique à l'une des deux enveloppes (13,14) et est adapté à pénétrer dans un logement (19) porté par l'autre enveloppe (14,13) afin de réaliser l'encliquetage.

5. Appareil (1) selon la revendication 3 ou 4, **caractérisé en ce qu'**au moins une patte (21) est fixée à l'une des deux enveloppes (13,14) et est adaptée à pénétrer dans une cavité (22) portée par l'autre enveloppe (14,13) et à prendre appui contre une paroi axiale de cette cavité (22) de façon à former un point d'appui facilitant l'encliquetage de l'élément rapporté (15) par rotation autour de l'axe d'encliquetage (24) défini par les points d'appui.

6. Appareil selon l'une des revendications 1 à 5, **caractérisé en ce que** le premier panneau (2) comprend une butée (90) disposée en face du charnon femelle (7) et adaptée, d'une part, lors du rapprochement des deux panneaux (2,3), à guider la première enveloppe (13) de sorte que la première enveloppe (13) recouvre partiellement l'extrémité axiale adjacente (12) du charnon mâle (6) correspondant, et, d'autre part, à recevoir le deuxième panneau (3) en butée en position ouverte en porte-à-faux permettant la réception de l'élément rapporté (15).

7. Appareil (1) selon l'une des revendications 1 à 6, **caractérisé en ce que** le charnon femelle (7) possède sur sa face latérale (25) deux ouvertures latérales (26,27) espacées angulairement l'une de l'autre, chaque ouverture latérale (26,27) étant délimitée angulairement par un premier bord latéral (28,29) formant une extrémité latérale (28,29) de la première enveloppe (13), et par un deuxième bord latéral (20,30) faisant face au premier bord latéral (28,29) et formant une extrémité latérale (20,30) de la deuxième enveloppe (14), et, quelle que soit la position relative des deux panneaux (2,3), chaque ouverture latérale (26,27) débouchant face à un orifice (31,32) réalisé dans un panneau (2,3).

8. Appareil (1) selon l'une des revendications 1 à 7, **caractérisé en ce que** la charnière (4) comprend des moyens d'appui définitif adaptés, quand la charnière (4) est réalisée, à recevoir au moins un ressort de torsion (33) adapté à solliciter en permanence les deux panneaux (2,3) vers leur position écartée.

9. Appareil (1) selon la revendication 8, **caractérisé en ce que**, pour chaque ressort (33), les moyens d'appui définitif comprennent un premier logement définitif (35) solidaire d'un charnon mâle (6) adapté à recevoir une première extrémité (36) du ressort (33), et un deuxième logement définitif (37) solidaire d'un charnon femelle (7) adjacent au charnon mâle (6), adapté à recevoir une deuxième extrémité (38) du ressort (33).

10. Appareil (1) selon la revendication 8 ou 9, **caractérisé en ce que** chaque ressort (33) est compressible dans la direction longitudinale qui est normale à son élasticité angulaire, et **en ce que** l'élément rapporté (15) comprend, pour chaque ressort (33), des moyens d'appui transitoire adaptés, quand l'élément rapporté (15) est désolidarisé du deuxième panneau (3), à recevoir le ressort (33) et à le maintenir solidaire de l'élément rapporté (15) de façon sensiblement comprimé longitudinalement et angulairement.

11. Appareil (1) selon la revendication 10 dépendante de la revendication 9, **caractérisé en ce que**, pour chaque ressort (33), les moyens d'appui transitoire comprennent un premier logement transitoire (43) adapté à recevoir la première extrémité (36) du ressort (33) et un deuxième logement transitoire (44) adapté à recevoir la deuxième extrémité (38) du ressort (33).

12. Appareil (1) selon la revendication 10 ou 11, **caractérisé en ce que**, pour chaque ressort (33), le charnon mâle (6) correspondant comprend des moyens de transfert (48) adaptés à coopérer avec des moyens complémentaires de transfert (49) solidaires de l'élément rapporté (15) de sorte que, pendant la solidarisation de l'élément rapporté (15), le ressort (33) est comprimé longitudinalement et passe par encliquetage des moyens d'appui transitoire aux moyens d'appui définitif.

13. Appareil (1) selon la revendication 11 ou 12, **caractérisé en ce que** l'élément rapporté (15) comprend un bord de précontrainte (62) adapté, quand la deuxième extrémité (58) du ressort (33) est dans le deuxième logement transitoire (44), à permettre le positionnement de la première extrémité (36) dans le premier logement transitoire (43) par encliquetage.

14. Procédé de montage d'une charnière (4) d'un appareil électroménager (1) comportant deux panneaux (2,3) articulés entre eux par la charnière (4), comportant une première étape pendant laquelle un premier panneau (2) qui comporte au moins un charnon mâle (6), est amené contre le deuxième panneau (3) comportant au moins une première enveloppe (13), une deuxième étape pendant laquelle un élément rapporté (15) qui comporte au moins une deuxième enveloppe (14), est amené contre le premier panneau (2), et une troisième étape pendant laquelle l'élément rapporté (15) est solidarisé au deuxième panneau (3) de sorte que les deux enveloppes (13,14) forment un charnon femelle (7) emprisonnant au moins une extrémité axiale (12) adjacente d'un charnon mâle (6) du premier panneau (2), **caractérisé en ce que**, lors de la première étape, chaque extrémité axiale (8) de la première enveloppe (13), qui est adjacente à un charnon, recouvre l'extrémité axiale (12) adjacente d'un charnon mâle (6) du premier panneau (2), **en ce que**, lors de la deuxième étape, chaque extrémité axiale (9) de la deuxième enveloppe (14), qui est adjacente à un charnon, recouvre l'extrémité axiale (12) adjacente d'un charnon mâle (6) du premier panneau (2), et **en ce que**, lors de la troisième étape, chaque extrémité axiale (11) du charnon femelle (7), qui est adjacente à un charnon, emprisonne l'extrémité axiale (12) adjacente d'un charnon mâle (6) du premier panneau (2).

15. Procédé selon la revendication 14, **caractérisé en ce que** le premier panneau (2) comporte deux charnons mâles (6) latéraux (6), **en ce que** la première enveloppe (13) recouvre, par chacune de ses extrémités axiales (8), l'extrémité axiale (12) adjacente du charnon mâle (6) correspondant une fois la première étape réalisée, **en ce que** la deuxième enveloppe (14) recouvre, par chacune de ses extrémités axiales (9), l'extrémité axiale (12) adjacente du charnon mâle (6) correspondant une fois la deuxième étape réalisée, et **en ce que** le charnon femelle (7) central emprisonne, par chacune de ses extrémités axiales (11), l'extrémité axiale (12) adjacente du charnon mâle (6) correspondant une fois la troisième étape réalisée.

16. Procédé selon la revendication 14 ou 15, **caractérisé en ce que**, lors du rapprochement de l'élément rapporté (15), chaque patte (21) fixée à l'une des deux enveloppes (13,14) est introduite dans une cavité (22) correspondante portée par l'autre enveloppe (14,13), l'élément rapporté (15) est pivoté par rapport à un axe d'encliquetage (24) défini par des points d'appui, chaque patte (21) étant en appui contre la paroi axiale de la cavité (22) correspondante, et, par ce pivotement, chaque crochet (18) fixé de façon élastique à l'une des deux enveloppes (13,14) se rapproche d'un logement (19) correspondant porté par l'autre enveloppe (14,13), puis s'encliquette à l'intérieur de celui-ci.

17. Procédé selon l'une des revendications 14 à 16, **caractérisé en ce que**, une fois les deux panneaux (2,3) amenés l'un contre l'autre, ils sont pivotés l'un par rapport à l'autre par rotation des extrémités axiales (8) de la première enveloppe (13) autour des extrémités axiales adjacentes (12) correspondantes des charnons mâles (6) jusqu'à une position ouverte dans laquelle le deuxième panneau (3) vient en butée contre une butée (90) portée par le premier panneau (2) et est maintenu en porte-à-faux dans cette position, d'une part, par la butée (90), et, d'autre part, par les extrémités axiales (8) de la première enveloppe (13) qui sont en butée contre les extrémités axiales adjacentes (12) correspondantes des charnons mâles (6), l'élément rapporté (15) étant alors amené entre les deux panneaux (2,3) du côté du secteur angulaire proche de 90° formé par les deux panneaux (2,3).

18. Procédé selon l'une des revendications 14 à 17, **caractérisé en ce que**, avant le rapprochement de l'élément rapporté (15), des câbles sont disposés de façon à traverser la première enveloppe (13), de la première extrémité latérale (28) de la première enveloppe (13) adaptée à former un premier bord latéral d'une première ouverture latérale (26) du charnon femelle (7), à la deuxième extrémité latérale (29) de la première enveloppe (13) adaptée à former un premier bord latéral d'une deuxième ouverture latérale (27) du charnon femelle (7), espacée angulairement de la première ouverture latérale (26).

19. Procédé selon l'une des revendications 14 à 18, **caractérisé en ce que**, simultanément à la mise en place de l'élément rapporté (15), au moins un ressort de torsion (33) adapté à solliciter en permanence les deux panneaux (2,3) dans une position angulaire relative prédéterminée est introduit dans la charnière (4) de sorte que, pour chaque ressort (33), la première extrémité (36) du ressort (33) est située dans un premier logement définitif (35) réalisé dans un charnon mâle (6) et la deuxième extrémité (38) du ressort (33) est située dans un deuxième logement définitif (37) réalisé dans le charnon femelle (7).

20. Procédé selon la revendication 19, **caractérisé en ce que**, pendant la mise en place de l'élément rapporté (15), pour chaque ressort (33) préalablement comprimé longitudinalement et angulairement dans l'élément rapporté (15), des moyens de transfert (48) solidaires d'un charnon mâle (6) coopèrent avec des moyens complémentaires de transfert (49) solidaires de l'élément rapporté (15) de sorte que, pendant la solidarisation de l'élément rapporté (15), le ressort (33) est comprimé longitudinalement et sa première extrémité (36) passe, par encliquetage, d'un premier logement transitoire (43) réalisé dans l'élément rapporté (15) au premier logement définitif (37).

## Patentansprüche

1. Elektrogerät (1), umfassend zwei Platten (2,3), die miteinander durch ein Gelenk (4) angelenkt sind, welches sich entlang einer Gelenkachse (5) erstreckt und welches aufweist, einerseits mindestens ein Außengelenk (6), das mit einer ersten Platte (2) verbunden ist und andererseits wenigstens ein Innengelenk (7), das mit der zweiten Platte (3) verbunden ist, in benachbarter Weise in der axialen Verlängerung des Außengelenks (6) angeordnet ist und umfassend, einerseits ein erstes Gehäuse (13), das mit der zweiten Platte (3) verbunden ist und andererseits ein zweites ergänzendes Gehäuse (14), das mit einem zusammengesetzten Element (15) verbunden ist, das ergänzende Befestigungsmittel (18) umfasst, die angepasst sind, um mit Befestigungsmitteln (19) der zweiten Platte (3) zusammenzuwirken, derart, um das zusammengesetzte Element (15) zur zweiten Platte (3) zu verbinden und das Innengelenk (7) zu bilden, **dadurch gekennzeichnet, dass** jedes axiale Ende (11) des Innengelenks (7), das zu einem Gelenk benachbart ist, das axiale Ende (12) überlappt, das zu einem Außengelenk (6) benachbart ist und durch das axiale Ende (8) entsprechend dem ersten Gehäuse (13) gebildet wird, das einen Teil des Zylinders bildet und durch das axiale Ende (9), entsprechend dem zweiten Gehäuse (14), das einen anderen ergänzenden Teil des gleichen Zylinders bildet, derart, dass das axiale Ende (12) des Außengelenks (6) umschlossen wird.

2. Gerät (1) nach Anspruch 1, **dadurch gekennzeichnet, dass** das Gelenk (4) zwei laterale Außengelenke (6) umfasst, die mit der ersten Platte (2) verbunden sind und ein mittleres Innengelenk (7), das mit der zweiten Platte (3) verbunden ist, welche axial zwischen den lateralen Gelenken (7) angeordnet ist und von denen jedes axiale Ende (11) das axiale Ende (12), benachbart zum entsprechenden Außengelenk (6), umschließt.

3. Gerät (1) nach Anspruch 1 oder 2, **dadurch gekennzeichnet, dass** die Befestigungsmittel (19) und die ergänzenden Befestigungsmittel (18) mittels Rastung zusammenwirken.

4. Gerät (1) nach Anspruch 3, **dadurch gekennzeichnet, dass** zumindest ein Haken (18) in elastischer Weise an einem der zwei Gehäuse (13, 14) befestigt ist und angepasst ist, in eine Anordnung (19) einzutreten, die durch das andere Gehäuse (14, 13) getragen wird um die Rastung zu bilden.

5. Gerät (1) nach Anspruch 3 oder 4 , **dadurch gekennzeichnet, dass** mindestens eine Klammer (21), an einem der zwei Gehäuse (14, 13) angebracht ist und angepasst ist, in eine Vertiefung (22) einzutreten, die durch das andere Gehäuse (14, 13) getragen wird und Halt gegen eine axiale Wand dieser Vertiefung (22) zu nehmen, derart, dass ein Haltepunkt gebildet wird, der die Rastung des zusammengesetzten Elements (15) durch Drehung um die Rastungsachse (24), die durch die Haltepunkte definiert ist, erleichtert.

6. Gerät nach einem der Ansprüche 1 bis 5, **dadurch gekennzeichnet, dass** die erste Platte (2) einen Anschlag (90) umfasst, der gegenüber dem Innengelenk (7) angeordnet ist und angepasst ist, einerseits bei Annäherung der zwei Platten (2, 3) das erste Gehäuse (13) derart zu führen, dass das erste Gehäuse (13) teilweise das axiale Ende bedeckt, das zum entsprechenden Außengelenk (6) benachbart ist, und andererseits die zweite Platte (3) im Anschlag freitragend in einer geöffneten Position aufzunehmen, um eine Aufnahme des zusammengesetzten Elements (15) zu erlauben.

7. Gerät (1) nach einem der Ansprüche 1 bis 6, **dadurch gekennzeichnet, dass** das Innengelenk (7) auf seiner lateralen Seite (25) zwei laterale Öffnungen (26, 27) besitzt, die winkelig eine zur anderen beabstandet sind, wobei jede laterale Öffnung (26, 27) winkelig abgegrenzt ist, durch einen ersten lateralen Rand (28, 29), der ein laterales Ende (28, 29) des ersten Gehäuses (13) bildet und durch einen zweiten lateralen Rand (20, 30), der dem ersten lateralen Rand (28, 29) zugewandt ist und ein laterales Ende (20, 30) des zweiten Gehäuses (14) bildet, und wobei, wie die relative Position der zwei Platten (2, 3) sei, jede laterale Öffnung (26, 27) gegenüber einer Öffnung (31, 32) einmündet, die in einer Platte (2, 3) ausgebildet ist.

8. Gerät (1) nach einem der Ansprüche 1 bis 7, **dadurch gekennzeichnet, dass** das Gelenk (4) Mittel für einen endgültigen Halt umfasst, wenn das Gelenk (4) gebildet ist, die angepasst sind, um mindestens eine Verdrehungsfeder (33) aufzunehmen, die angepasst ist, die beiden Platten (2, 3) ständig gegen ihre getrennte Position zu beanspruchen.

9. Gerät (1) nach Anspruch 8, **dadurch gekennzeichnet, dass** für jede Feder (33), die Mittel für einen endgültigen Halt umfassen, eine erste endgültige Anordnung (35), die mit einem Außengelenk (6) verbunden ist, angepasst, um ein erstes Ende (36) der Feder (33) aufzunehmen und eine zweite endgültige Anordnung (37), die mit einem Innengelenk (7) verbunden ist, benachbart zum Außengelenk (6), angepasst, um ein zweites Ende (38) der Feder (33) aufzunehmen.

10. Gerät (1) nach Anspruch 8 oder 9, **dadurch gekennzeichnet, dass** jede Feder (33) zusammendrückbar in die longitudinale Richtung ist, die normal auf ihre Winkel-Elastizität ist und dass das zusammengesetzte Element (15) für jede Feder (33) umfasst, Mittel für einen vorübergehenden Halt, die angepasst sind, wenn das zusammengesetzte Element (15) von der zweiten Platte (3) getrennt ist, die Feder (33) aufzunehmen und sie mit dem zusammengesetzten Element (15) in einer im Wesentlichen longitudinal und winkelförmig zusammengedrückten Weise verbunden aufrecht zu erhalten.

11. Gerät (1) nach Anspruch 10, der von Anspruch 9 abhängig ist, **dadurch gekennzeichnet, dass** für jede Feder (33), die Mittel für einen vorübergehenden Halt eine erste vorübergehende Anordnung (43) umfassen, die angepasst ist, das erste Ende (36) der Feder (33) aufzunehmen und eine zweite vorübergehende Anordnung (44), die angepasst ist, das zweite Ende (38) der Feder (33) aufzunehmen.

12. Gerät (1) nach Anspruch 10 oder 11, **dadurch gekennzeichnet, dass** für jede Feder (33) das entsprechende Außengelenk (6) Transfermittel (48) umfasst, die angepasst sind, um mit ergänzenden Transfermitteln (49) zusammenzuwirken, die mit dem zusammengesetzten Element (15) derart verbunden sind, dass während der Verbindung des zusammengesetzten Elements (15), die Feder (33) longitudinal zusammengedrückt wird und bei Rastung von Mitteln zum vorübergehenden Halt zu Mitteln zum endgültigen Halt geht.

13. Gerät (1) nach Anspruch 11 oder 12, **dadurch gekennzeichnet, dass** das zusammengesetzte Element (15) einen Vorspannungsrand (62) umfasst, der angepasst ist, die Positionierung des ersten Endes (36) in der ersten vorübergehenden Anordnung (43) durch Rastung zu erlauben, wenn das zweite Ende (58) der Feder (33) sich in der zweiten vorübergehenden Anordnung (44) befindet.

14. Verfahren zum Montieren eines Gelenks (4) eines Elektrogeräts (1), umfassend zwei Platten (2, 3), die über das Gelenk (4) miteinander angelenkt sind, umfassend einen ersten Schritt bei dem eine erste Platte (2), die mindestens ein Außengelenk (6) umfasst, gegen die zweite Platte (3) geführt wird, die mindestens ein erstes Gehäuse (13) umfasst, einen zweiten Schritt bei dem ein zusammengesetztes Element (15), das mindestens ein zweites Gehäuse (14) umfasst, gegen die erste Platte (2) geführt wird und einen dritten Schritt, bei dem das zusammengesetzte Element (15) zur zweiten Platte (3) derart verbunden ist, dass die zwei Gehäuse (13, 14) ein Innengelenk (7) bilden, das mindestens ein axiales Ende (12) umschließt, das benachbart zum Außengelenk (6) der ersten Platte (2) ist, **dadurch gekennzeichnet, dass** während des ersten Schritts jedes axiale Ende (8) des ersten Gehäuses (13), das benachbart zu einem Gelenk ist, das axiale Ende (12) bedeckt, das zu einem Außengelenk (6) der ersten Platte (2) benachbart ist, und dass während des zweiten Schritts jedes axiale Ende (9) des zweiten Gehäuses (14), das benachbart zu einem Gelenk ist, das axiale Ende (12) bedeckt, das benachbart zu einem Außengelenk (6) der ersten Platte (2) ist, und dass während des dritten Schritts, jedes axiale Ende (11) des Innengelenks (7), das benachbart zu einem Gelenk ist, das axiale Ende (12) umschließt, das benachbart zu einem Außengelenk (6) der ersten Platte (2) ist.

15. Verfahren nach Anspruch 14, **dadurch gekennzeichnet, dass** die erste Platte (2) zwei laterale (6) Außengelenke (6) umfasst, dass das erste Gehäuse (13) durch jedes seiner axialen Enden (8), das axiale Ende (12) bedeckt, das benachbart zum entsprechenden Außengelenk (6) ist, wenn der erste Schritt einmal durchgeführt ist, dass das zweite Gehäuse (14) durch jedes seiner axialen Enden (9) das axiale Ende (12) bedeckt, das benachbart zum entsprechenden Außengelenk (6) ist, wenn der zweite Schritt einmal durchgeführt ist, und dass das mittlere Innengelenk (7) durch jedes seiner axialen Enden (11) einschließt, das axiale Element (12), das benachbart zum entsprechenden Außengelenk (6) ist, wenn der dritte Schritt einmal durchgeführt ist.

16. Verfahren nach Anspruch 14 oder 15, **dadurch gekennzeichnet, dass** bei der Annäherung des zusammengesetzten Elements (15), jede Klammer (21), die an einem der beiden Gehäuse (13, 14) befestigt ist, in eine entsprechende Vertiefung (22) eingeführt wird, die vom anderen Gehäuse (14, 13) getragen wird, wobei das zusammengesetzte Element (15) mit Bezug auf eine Rastungsachse (24), die durch die Haltepunkte definiert ist, geschwenkt wird, wobei jede Klammer (21) sich gegen die axiale Wand der entsprechenden Vertiefung (22) stützt und wobei durch diese Schwenkung jeder Haken (18), der elastisch an eines der beiden Gehäuse (13, 14) befestigt ist, sich einer entsprechenden Anordnung (19) nähert, die durch das andere Gehäuse (14, 13) getragen wird, wobei er anschließend im Inneren dieser einrastet.

17. Verfahren nach einem der Ansprüche 14 bis 16, **dadurch gekennzeichnet, dass** wenn einmal die zwei Platten (2, 3) einander zugeführt sind, sie gegeneinander durch Rotation der axialen Enden (8) des ersten Gehäuses (13) um die entsprechenden benachbarten axialen Enden (12) der Außengelenke (6) bis in eine offene Position geschwenkt werden, in welcher die zweite Platte (3) in Anschlag gegen einen Anschlag (90) kommt, der durch die erste Platte (2) getragen wird und in dieser Position freitragend aufrecht erhalten wird, einerseits durch den Anschlag (90) und andererseits durch die axialen Enden (8) des ersten Gehäuses (13), die gegen die entsprechenden benachbarten axialen Enden (12) der Außengelenke (6) anschlagen, wobei das zusammengesetzte Element (15) zwischen die zwei Platten (2, 3) zugeführt wird, von der Seite des Winkelsektors nahe 90°, der durch die zwei Platten (2, 3) gebildet wird.

18. Verfahren nach einem der Ansprüche 14 bis 17, **dadurch gekennzeichnet, dass** vor der Annäherung des zusammengesetzten Elements (15), Kabel derart angeordnet sind, um das erste Gehäuse (13) von dem ersten lateralen Ende (28) des ersten Gehäuses (13) zu durchdringen, das angepasst ist, um einen ersten lateralen Rand einer ersten lateralen Öffnung (26) des Innengelenks (7) zu bilden, zum zweiten lateralen Ende (29) des ersten Gehäuses (13), das angepasst ist, um einen ersten lateralen Rand einer zweiten lateralen Öffnung (27) des Innengelenks (7) zu bilden, die winkelig zur ersten lateralen Öffnung (26) beabstandet ist.

19. Verfahren nach einem der Ansprüche 14 bis 18, **dadurch gekennzeichnet, dass** gleichzeitig mit dem Platzieren des zusammengesetzten Elements (15) mindestens eine Verdrehungsfeder (33) in das Gelenk (4) eingeführt wird, die angepasst ist, um ständig die zwei Platten (2, 3) in einer relativen vorbestimmten Winkelposition zu beanspruchen, derart, dass für jede Feder (33), das erste Ende (36) der Feder (33) sich in einer ersten endgültigen Anordnung (35) befindet, die in einem Außengelenk (6) ausgebildet ist und wobei das zweite Ende (38) der Feder (33) in einer zweiten endgültigen Anordnung (37) angeordnet ist, die in dem Innengelenk (7) ausgebildet ist.

20. Verfahren nach Anspruch 19, **dadurch gekennzeichnet, dass** während des Platzierens des zusammengesetzten Elements (15), für jede Feder (33), die zuvor longitudinal und winkelig im zusammengesetzten Element (15) zusammengedrückt wurde, Transfermittel (48), die mit einem Außengelenk (6) verbunden sind, mit ergänzenden Transfermitteln (49), die mit dem zusammengesetzten Element (15) verbunden sind, zusammenwirken, derart, dass während der Verbindung des zusammengesetzten Elements (15) die Feder (33) longitudinal zusammengedrückt wird und ihr erstes Ende (36) durch Rastung von einer ersten vorübergehenden Anordnung (43), die in dem zusammengesetzten Element (15) ausgebildet ist, zur ersten endgültigen Anordnung (37) übergeht.

## Claims

1. Domestic appliance (1) comprising two panels (2, 3) pivoted together by a hinge (4) that extends along a hinge axis (5) and that comprises, on the one hand, at least one male knuckle (6) connected to a first panel (2) and, on the other hand, adjacent to this in the axial continuation of the male knuckle (6), at least one female knuckle (7) connected to the second panel (3) and comprising, on the one hand, a first envelope (13) connected to the second panel (3) and, on the other hand, a complementary second envelope (14) connected to an independent component (15) that has complementary fixing means (18) designed to engage with fixing means (19) on the second panel (3) in such a way as to connect the independent component (15) to the second panel (3) and produce the female knuckle (7), which appliance is **characterized in that** each axial end (11) of the female knuckle (7), which is adjacent to a knuckle, covers the adjacent axial end (12) of a male knuckle (6), and is formed by the corresponding axial end (8) of the first envelope (13) forming one part of a cylinder and by the corresponding axial end (9) of the second envelope (14) forming another and complementary part of the same cylinder in such a way as to imprison the axial end (12) of the male knuckle (6).

2. Appliance (1) according to Claim 1, **characterized in that** the knuckle (4) has two lateral male knuckles (6) connected to the first panel (2) and, located axially between the lateral knuckles (7), a central female knuckle (7) connected to the second panel (3), each axial end (11) of which imprisons the adjacent axial end (12) of the corresponding male knuckle (6).

3. Appliance (1) according to Claim 1 or 2, **characterized in that** the fixing means (19) and the complementary fixing means (18) engage by snap action.

4. Appliance (1) according to Claim 3, **characterized in that** at least one hook (18) is fixed elastically to one of the two envelopes (13, 14) and fits into a housing (19) carried by the other envelope (14, 13) in order to engage by snap action.

5. Appliance (1) according to Claim 3 or 4, **characterized in that** at least one tab (21) is fixed to one of the two envelopes (13, 14) and fits into a cavity (22) carried by the other envelope (14, 13) and is designed to bear against an axial wall of this cavity (22) so as to form a support point that will facilitate the snap engagement of the independent component (15) by rotation about the axis of snap action (24) defined by the support points.

6. Appliance according to one of Claims 1 to 5, **characterized in that** the first panel (2) comprises a stop (90) located in front of the female knuckle (7) and designed on the one hand, as the two panels (2, 3) come together, to guide the first envelope (13) in such a way that the first envelope (13) partially covers the adjacent axial end (12) of the corresponding male knuckle (6), and on the other hand to arrest the second panel (3) in an open, not quite vertical position allowing reception of the independent component (15).

7. Appliance (1) according to one of Claims 1 to 6, **characterized in that** the female knuckle (7) possesses on its lateral face (25) two lateral openings (26, 27). spaced apart angularly from each other, each lateral opening (26, 27) being bounded angularly by a first lateral edge (28, 29) forming a lateral extremity (28, 29) to the first envelope (13), and by a second lateral edge (20, 30) facing the first lateral edge (28, 29) and forming a lateral extremity (20, 30) to the second envelope (14), and, whatever the relative positions of the two panels (2, 3), each lateral opening (26, 27) is in communication with an orifice (31, 32) formed in a panel (2, 3).

8. Appliance (1) according to one of Claims 1 to 7, **characterized in that** the hinge (4) comprises final support means which, when the hinge (4) is produced, are designed to take at least one torsion spring (33) designed to permanently stress the two panels (2, 3) towards their open position.

9. Appliance (1) according to Claim 8, **characterized in that**, for each spring (33), the final support means comprise a first final housing (35) integral with a male knuckle (6) designed to take a first end (36) of the spring (33), and a second final housing (37) integral with a female knuckle (7) adjacent to the male knuckle (6), designed to take a second end (38) of the spring (33).

10. Appliance (1) according to Claim 8 or 9, **characterized in that** each spring (33) is compressible in the longitudinal direction which is normal to its angular elasticity, and **in that** the independent component (15) comprises, for each spring (33), transitional support means which, when the independent component (15) is disconnected from the second panel (3), are designed to take the spring (33) and keep it connected to the independent component (15) under some longitudinal and angular compression.

11. Appliance (1) according to Claim 10 dependent on Claim 9, **characterized in that**, for each spring (33), the transitional support means comprise a first transitional housing (43) designed to take the first end (36) of the spring (33) and a second transitional housing (44) designed to take the second end (38) of the spring (33).

12. Appliance (1) according to Claim 10 or 11, **characterized in that**, for each spring (33), the corresponding male knuckle (6) comprises transfer means (48) designed to interact with complementary transfer means (49) integral with the independent component (15) in such a way that, during the connection of the independent component (15), the spring (33) is compressed longitudinally and moves by snap action from the transitional support means to the final support means.

13. Appliance (1) according to Claim 11 or 12, **characterized in that** the independent component (15) comprises a prestressing edge (62) which, when the second end (58) of the spring (33) is in the second transitional housing (44), is designed to allow the first end (36) to be positioned in the first transitional housing (43) by snap action.

14. Process for assembling a hinge (4) of a domestic appliance (1) comprising two panels (2, 3) pivoted together by the hinge (4), comprising a first step during which a first panel (2) that comprises at least one male knuckle (6) is presented to the second panel (3) comprising at least one first envelope (13), a second step during which an independent component (15) that comprises at least one second envelope (14) is presented to the first panel (2), and a third step during which the independent component (15) is connected to the second panel (3) in such a way that the two envelopes (13, 14) form a female knuckle (7) imprisoning at least one adjacent axial end (12) of a male knuckle (6) belonging to the first panel (2), which process is **characterized in that**, in the first step, each axial end (8) of the first envelope (13), which is adjacent to a knuckle, covers the adjacent axial end (12) of a male knuckle (6) belonging to the first panel (2), **in that**, in the second step, each axial end (9) of the second envelope (14), which is adjacent to a knuckle, covers the adjacent axial end (12) of a male knuckle (6) belonging to the first panel (2), and **in that**, in the third step, each axial end (11) of the female knuckle (7), which is adjacent to a knuckle, imprisons the adjacent axial end (12) of a male knuckle (6) belonging to the first panel (2).

15. Process according to Claim 14, **characterized in that** the first panel (2) comprises two lateral male knuckles (6), **in that** the first envelope (13) covers, with each of its axial ends (8), the adjacent axial end (12) of the corresponding male knuckle (6) once the first step is completed, **in that** the second envelope (14) covers, with each of its axial ends (9), the adjacent axial end (12) of the corresponding male knuckle (6) once the second step is completed, and **in that** the central female knuckle (7) imprisons, with each of its axial ends (11), the adjacent axial end (12) of the corresponding male knuckle (6) once the third step is completed.

16. Process according to Claim 14 or 15, **characterized in that**, as the independent component (15) is moved into position, each tab (21) fixed to one of the two envelopes (13, 14) is inserted into a corresponding cavity (22) in the other envelope (14, 13), the independent component (15) is pivoted relative to an axis of snap action (24) defined by support points, each tab (21) being supported by the axial wall of the corresponding cavity (22), and, owing to this pivoting, each hook (18) fixed elastically to one of the two envelopes (13, 14) moves towards a corresponding housing (19) in the other envelope (14, 13) and snaps into it.

17. Process according to one of Claims 14 to 16, **characterized in that** when the two panels (2, 3) have been presented to each other, they are pivoted relative to each other by rotating the axial ends (8) of the first envelope (13) about the corresponding adjacent axial ends (12) of the male knuckles (6) until an open position is reached in which the second panel (3) is arrested by a stop (90) on the first panel (2) and is held in this not quite a vertical position, partly by the stop (90) and partly by the axial ends (8) of the first envelope (13) which are arrested by the corresponding adjacent axial ends (12) of the male knuckles (6), the independent component (15) then being presented between the two panels (2, 3) in the approximately 90° angle formed between the two panels (2, 3).

18. Process according to one of Claims 14 to 17, **characterized in that**, before the independent component (15) is introduced, cables are laid through the first envelope (13), from the first lateral extremity (28) of the first envelope (13) designed to form a first lateral edge of a first lateral opening (26) of the female knuckle (7), to the second lateral extremity (29) of the first envelope (13) designed to form a first lateral edge of a second lateral opening (27) of the female knuckle (7), which is spaced apart angularly from the first lateral opening (26).

19. Process according to one of Claims 14 to 18, **characterized in that** at the same time as the independent component (15) is being put into position, at least one torsion spring (33) designed to permanently stress the two panels (2, 3) into a predetermined relative angular position is inserted into the hinge (4) in such a way that, for each spring (33), the first end (36) of the spring (33) is situated in a first final housing (35) formed in a male knuckle (6) and the second end (38) of the spring (33) is situated in a second final housing (37) formed in the female knuckle (7).

20. Process according to Claim 19, **characterized in that** as the independent component (15) is being put into position, for each spring (33) longitudinally and angularly precompressed in the independent component (15), transfer means (48) integral with a male knuckle (6) interact with complementary transfer means (49) integral with the independent component (15) in such a way that, as the independent component (15) is being connected, the spring (33) is compressed longitudinally and its first end (36) moves by snap action from a first transitional housing (43) in the independent component (15) to the first final housing (37).
